Europäisches Patentamt

European Patent Office

Office européen des brevets

(11) Numéro de publication : **0 584 004 A1**

# (12) DEMANDE DE BREVET EUROPEEN

(21) Numéro de dépôt : 93402020.7

(51) Int. Cl.⁵ : **B01J 20/24,** C02F 1/28

(22) Date de dépôt : **06.08.93**

(30) Priorité : **17.08.92 FR 9210083**

(43) Date de publication de la demande :
**23.02.94 Bulletin 94/08**

(84) Etats contractants désignés :
**AT BE CH DE DK ES FR GB GR IE IT LI LU MC
NL PT SE**

(71) Demandeur : **EMC SERVICES
62, rue Jeanne d'Arc
F-75013 Paris (FR)**

(72) Inventeur : **Gaballah, Ibrahim
29, avenue de Vieux Château
FR-54500 Vandoeuvre (FR)**
Inventeur : **Goy, Didier
161, rue du Sergent Blandan
FR-54000 Nancy (FR)**
Inventeur : **Kilbertus, Gérard
16, rue des Alliés
FR-57525 Talange (FR)**
Inventeur : **Thauront, Jacques
84, rue La Bruyère
FR-95120 Ermont (FR)**

(74) Mandataire : **Desaix, Anne et al
Ernest Gutmann - Yves Plasseraud S.A. 3, rue
Chauveau-Lagarde
F-75008 Paris (FR)**

(54) **Substrat biologique pour l'adsorption de contaminants en milieu aqueux.**

(57)    L'invention a pour objet un substrat biologique tel qu'obtenu à partir d'un matériau de type lignocellulosique (dit "matériau ligno-cellulosique de base") dégradé par des microorganismes, caractérisé par :
— une quantité de lignine supérieure à 10%, avantageusement 15% en poids sec du matériau ligno-cellulosique ;
— une répartition en composés phénoliques des extraits du matériau ligno-cellulosique du substrat, telle que la proportion en poids sec des composés phénoliques sous forme de polymères est inférieure à la somme des proportions en poids sec des trimères, dimères et monomères des composés phénoliques des extraits ;
— une quantité de carbone (C) et d'azote (N) telle que le rapport C/N est compris entre environ 50 et environ 70, de préférence est situé autour de 55 ;
— la présence de microorganismes, notamment de microorganismes capables de dégrader des matériaux de type ligno-cellulosique et le cas échéant la présence de leurs parois.

EP 0 584 004 A1

L'invention a pour objet un substrat biologique pour l'adsorption de contaminants présents dans un milieu aqueux.

De nombreuses industries rejettent des solutions contenant des métaux tels que le chrome, le nickel, le cuivre, le zinc, l'étain, le cadmium. Des méthodes conventionnelles utilisées jusqu'à présent pour extraire les ions métalliques présents en solution font appel à la précipitation, à l'électrochimie, aux phénomènes d'échanges ioniques, à l'adsorption ou à la bioadsorption.

De nouvelles voies plus simples et plus économiques ont également été testées dans le cadre de la recherche de processus de dépollution d'effluents industriels.

Dans ce cadre des essais ont été effectués en utilisant pour l'extraction notamment d'ions métalliques, des déchets végétaux ayant le cas échéant subi un traitement chimique et/ou thermique.

Ainsi le brevet US 3.944.415 décrit un procédé pour le traitement d'eau contenant des ions métalliques lourds dans lequel l'extraction des ions métalliques est réalisée par mise en contact de l'eau à traiter avec des déchets de noix ou avec des écorces d'arbres après traitement avec du formaldéhyde. Selon le brevet américain 3.944.415 le traitement préalable des déchets de noix ou des écorces d'arbre assure leur stabilité et autorise donc leur usage prolongé dans le temps; ce traitement permet aussi et surtout de ne pas rejeter dans l'eau les pigments des déchets de noix ou des écorces utilisés.

Les inventeurs ont développé de nouveaux moyens propres à l'extraction de contaminants en solution, en particulier d'ions métalliques.

Ces moyens sont notamment adaptés à la dépollution d'effluents industriels liquides et à la purification d'eau ou à l'adoucissement d'eau salée. Ils peuvent être mis en oeuvre soit directement sur les effluents rejetés par des industries ou l'eau à traiter soit comme complément à un premier traitement, pour extraire des ions métalliques, ou d'autres composés habituellement rejetés par l'industrie, présents en concentration de l'ordre de quelques pour-cents voire quelques ppm (partie par million).

Les moyens décrits dans l'invention peuvent aussi être utilisés en cas de pollution accidentelle nécessitant une intervention rapide.

L'invention se rapporte donc à un substrat biologique à base de matière végétale et de microorganismes ou de leurs produits de dégradation, pour l'adsorption de contaminants contenus dans un milieu liquide, à un procédé de traitement d'un milieu comprenant ces contaminants et à un procédé de préparation du substrat biologique propre à la réalisation de l'invention à partir de déchets de l'industrie du bois.

Les contaminants susceptibles d'être adsorbés sur le substrat biologique selon l'invention sont en particulier des ions métalliques et de façon générale tout composé minéral volatil dont la température d'ébullition est inférieure à 350°C, ces composés étant présents en milieu aqueux. A titre d'exemple, on peut citer les composés chlorurés comme le chlorure d'aluminium, le chlorure de titane...

Le substrat de l'invention est donc le produit d'une biodégradation d'un matériau ligno-cellulosique de base, au moyen de microorganismes appropriés. Cette biodégradation se distingue des phénomènes naturels intervenant au niveau de la végétation par plusieurs points et en particulier par le fait qu'elle peut être contrôlée et modulée.

L'invention est particulièrement adaptée au traitement de solutions à partir desquelles on cherche à adsorber des ions métalliques.

Les moyens ci-dessus permettent selon la nature du substrat biologique utilisé et selon la concentration initiale en contaminants, d'extraire jusqu'à environ 100% de ces contaminants présents dans un milieu traité et ce en particulier quand les contaminants sont des ions métalliques.

Pour la réalisation du substrat biologique l'invention fait appel à un matériau dit ligno-cellulosique, qui répond à la définition donnée ci-dessous. Selon une terminologie botanique, cette expression inclut des matériaux pouvant être désignés par le terme libéro-ligneux.

L'invention concerne à cet égard un substrat biologique tel qu'obtenu à partir d'un matériau de type ligno-cellulosique dégradé par des microorganismes, caractérisé par :
- une quantité de lignine supérieure à 10%, avantageusement 15% en poids sec du matériau ligno-cellulosique ;
- une répartition en composés phénoliques des extraits du matériau ligno-cellulosique du substrat, telle que la proportion en poids sec des composés phénoliques sous forme de polymères est inférieure à la somme des proportions en poids sec des trimères, dimères et monomères des composés phénoliques des extraits ;
- une quantité de carbone (C) et d'azote (N) telle que le rapport C/N est compris entre environ 50 et environ 70, de préférence est situé autour de 55 ;
- la présence de microorganismes, notamment de microorganismes capables de dégrader des matériaux de type ligno-cellulosique et le cas échéant la présence de leurs parois.

Le substrat biologique de l'invention est obtenu par dégradation ménagée d'un matériau de type ligno-cellulosique (dit "matériau ligno-cellulosique de base").

Dans le substrat biologique de l'invention, la répartition des composés phénoliques des extraits est donc modifiée par rapport à cette répartition dans le matériau ligno-cellulosique de base (initial).

Avantageusement, la quantité de lignine dont il est question ci-dessus est supérieure à 15% et de façon préférée supérieure à 20% en poids sec du matériau ligno-cellulosique. Le poids sec est défini selon la norme Tappi Standard T12 os-75; ASTM Standard D 2016-65.

Les microorganismes présents dans le substrat de l'invention, peuvent être présents dans le matériau ligno-cellulosique de base ou peuvent être ajoutés. Dans ce second cas il sont choisis parmi les souches de bactéries, de champignons, de levures capables de dégrader préférentiellement la cellulose et les hémicelluloses. Les parois de ces microorganismes peuvent représenter des surfaces supplémentaires favorables à l'adsorption des contaminants. Les microorganismes présents dans le substrat peuvent être sous une forme active s'agissant de leur capacité à dégrader le matériau ligno-cellulosique; ils peuvent aussi être sous une forme de résistance notamment lorsque le substat est séché.

Les composés phénoliques ci-dessus sont notamment des tanins par exemple des gallotanins.

Un matériau ligno-cellulosique dans le cadre de l'invention est constitué par tout matériau d'origine végétale, comprenant de la cellulose et des hémicelluloses, le tout incrusté de lignine. Un tel matériau est par exemple constitué par toute enveloppe extérieure végétale répondant à ces caractéristiques, en particulier des écorces d'arbres ou des coquilles de fruits. On peut également avoir recours à des déchets de l'industrie du bois comme des dosses, des délignures, ou des sciures.

Le matériau ligno-cellulosique de l'invention est notamment choisi pour sa capacité de rétention des contaminants et en particulier des ions métalliques, en particulier lorsqu'il a subi un traitement approprié.

Selon la nature du matériau ligno-cellulosique de base utilisé pour constituer le substrat selon l'invention, la quantité de lignine peut varier de façon relativement importante. La présence de lignine dans le substrat facilite la captation et/ou l'échange des ions ou des autres contaminants entre le substrat et le milieu liquide à traiter.

Le substrat biologique de l'invention peut être constitué à partir d'essences sélectionnées soit chez des feuillus soit chez les résineux.

De préférence une seule essence sera utilisée pour préparer un substrat déterminé. Des essences particulièrement intéressantes sont celles de pin, de sapin ou d'épicéa.

Une autre caractéristique du substrat résulte de la présence de composés phénoliques sous forme hydrolysée au moins en partie voire totalement. Ces composés phénoliques sont par exemple des tanins, intéressants pour leur capacité d'adsorption de contaminants et en particulier d'ions métalliques et notamment de cations, en particulier de cations lourds. La proportion de composés phénoliques des extraits du substrat varie suivant la nature des microorganismes. La répartition de ces composés phénoliques des extraits en monomères, dimères et trimères, et polymères est également variable suivant le matériau de base utilisé.

On désigne par "extrait" dans le cadre de l'invention, la fraction extractible par un mélange d'eau et de solvants organiques selon la norme Tappi Standard T 12 os-75 ; ASTM Standard D 1105-56.

Par monomère, selon la définition de l'invention, on entend toute molécule représentant un motif de base constitutif des polymères. En particulier le substrat de l'invention dans sa partie végétale, comprend des composés phénoliques sous forme de polymères dont les monomères peuvent comprendre plusieurs groupements phénoliques. On peut donner comme exemple de monomères l'acide gallique, ellagique, chébulique, hexahydroxydiphénique, dehydrodigallique et valonique, molécules qui sont appelées ici monomères de base des gallotanins, et la catéchine et l'épicatéchine qui sont les monomères des tanins catéchiques.

Les différentes catégories de molécules des extraits peuvent être séparées par solubilisation fractionnée dans des solvants de polarités croissantes. La fraction des extraits soluble dans l'éther éthylique est constituée de monomères, celle soluble dans l'acétate d'éthyle est constituée de di et trimères. La fraction des extraits, insoluble dans les deux précédents solvants est constituée de polymères formés de plus de trois monomères de base.

Ainsi on aura avantageusement recours à un matériau initial ligno-cellulosique (pour la préparation de substrat biologique) contenant plus de 5% de composés phénoliques dans les extraits en poids sec par rapport à la masse du matériau ligno-cellulosique.

Au sein du substrat de l'invention, les polymères des composés phénoliques contenus dans les extraits sont minoritaires par rapport à la quantité totale de composés phénoliques des extraits. Selon un mode de réalisation particulièrement avantageux de l'invention, les extraits du substrat biologique sont essentiellement dépourvus de composés phénoliques sous forme de polymères. En d'autres termes la quantité de polymères phénoliques des extraits peut correspondre à 0% ou à des traces. Selon un autre mode de réalisation de l'invention, la proportion en poids sec des composés phénoliques des extraits est inférieure à la proportion en poids sec de l'ensemble dimères et trimères des composés phénoliques et inférieure à la proportion en poids sec des monomères des composés phénoliques.

D'une façon particulièrement avantageuse, cette proportion de polymères des composés phénoliques des extraits est inférieure à 50% en poids sec, voire inférieure à 30% ou inférieure à 10% et de préférence inférieure à 5% de la quantité totale des composés phénoliques des extraits.

Selon un autre mode de réalisation particulier de l'invention, les monomères des composés phénoliques constituent la plus grande proportion des composés phénoliques des extraits du substrat et représentent avantageusement plus de 90% des composés phénoliques des extraits, voire près de 100%.

La proportion de l'ensemble dimères, trimères des composés phénoliques des extraits est inférieure à la proportion des monomères.

De façon intéressante, le matériau ligno-cellulosique de base utilisé dans le cadre de l'invention, subit une étape initiale de lessivage naturel par les eaux de pluie, ou de lessivage sur site industriel en vue de la préparation du substrat biologique.

Selon une autre définition, le substrat végétal à base d'un matériau de type ligno-cellulosique est caractérisé en ce qu'il résulte de l'action ménagée de microorganismes sur le matériau ligno-cellulosique, action qui conduit à une dégradation éventuelle de ce dernier. L'action des microorganismes a principalement pour objet une modification et/ou une dégradation des composés phénoliques, de façon telle que les composés phénoliques des extraits, notamment les gallotanins initialement présents dans le matériau ligno-cellulosique sont dans le substrat biologique, sous forme hydrolysée au moins partiellement et que la proportion en poids sec de composés phénoliques des extraits sous forme de polymères, est inférieure à la somme des proportions des trimères, dimères et monomères, voire nulle.

Le traitement effectué sur le matériau ligno-cellulosique de base est destiné à hydrolyser les composés phénoliques des extraits pour obtenir un substrat vérifiant les caractéristiques précédentes s'agissant de sa composition et doit être ajusté en fonction de la composition du matériau de base en particulier en composés phénoliques.

Le traitement effectué peut en outre permettre de diminuer la quantité totale des composés phénoliques des extraits par rapport à la quantité initialement présente dans le matériau ligno-cellulosique.

Les conditions du traitement effectué, notamment le pH, l'humidité et l'aération, seront déterminées en fonction des composants du matériau ligno-cellulosique de base et des microorganismes présents.

De façon préférée lors de sa préparation, le pH du substrat est compatible avec le développement des microorganismes présents, notamment est compris entre environ 5,5 et environ 7,5.

Le taux d'humidité du substrat est avantageusement compris entre environ 50% et environ 65%.

Le substrat biologique de l'invention répondant à l'une des définitions données ci-dessus est tel que sa stabilité et sa capacité d'adsorption sont améliorées et qu'il permet lors du traitement d'effluents industriels liquides ou de tout produit dont on veut extraire des contaminants, de ne pas rejeter les pigments colorés habituellement constitués par les gallotanins, dans le produit traité.

La capacité de rétention des contaminants varie en fonction de la nature du substrat et en fonction des ions et autres composés susceptibles d'être extraits comme l'illustrent les exemples.

Lorsque le substrat biologique est obtenu à partir d'un matériau ayant subi un traitement par des microorganismes, il comprend avantageusement plus de 10% de préférence plus de 15% et avantageusement plus de 20% en poids sec de lignine par rapport à la masse de matériau ligno-cellulosique, généralement entre 10 et 50%.

On peut encore caractériser une catégorie de substrats selon l'invention, par le fait que la lignine qu'ils contiennent est en proportion plus importante qu'elle ne l'est dans le matériau ligno-cellulosique de base. La quantité de lignine du substrat est avantageusement supérieure à 10%, de préférence à 15%.

Selon un mode de réalisation avantageux de l'invention, la proportion d'hémicelluloses et de cellulose dans le substrat est inférieure par rapport aux proportions de ces composants dans le matériau ligno-cellulosique de départ.

Les proportions de constituants des substrats végétaux pourront être évaluées par exemple par la méthode de VAN SOEST telle que décrite dans le recueil d'analyses de la Communauté Européenne édité par le B.I.B.E.A. en Septembre 1976 (voir page 51 de ce recueil).

Le choix du matériau végétal utilisé pour constituer le substrat peut être fait en fonction de la nature des ions ou des autres contaminants à extraire, de l'efficacité d'adsorption recherchée et également de la sélectivité avec laquelle on souhaite traiter le milieu liquide contenant ces ions ou ces contaminants.

Un autre paramètre pouvant être pris en compte est la granulométrie du substrat.

Bien que la granulométrie ne soit pas un obstacle à la réalisation de la fonction d'adsorption des contaminants, on pourra utiliser de façon préférée des substrats sous forme de particules dont la majorité a une granulométrie inférieure à 1 cm, de préférence inférieure à 5 mm, avantageusement inférieure à 1 mm, notamment comprise entre 400 µm et 100 µm.

D'une façon générale la capacité de rétention des contaminants notamment des ions métalliques est augmentée en même temps que la surface de substrat. La diminution de la granulométrie peut néanmoins se heurter à des problèmes de coûts ou de filtration.

Le choix d'une granulométrie spécifique peut être également apprécié en fonction du type de matériau utilisé, selon qu'il s'agit par exemple d'une écorce d'arbre ou d'une coquille ou d'une autre enveloppe végétale.

Pour la réalisation de l'invention, le matériau ligno-cellulosique de départ peut être constitué par une écorce d'un arbre choisi parmi les conifères notamment une écorce de sapin, d'épicéa, de pin maritime ou de pin sylvestre.

L'écorce d'épicéa peut présenter un intérêt tout particulier dès lors qu'elle permet l'obtention de substrats extrêmement riches en lignine, la quantité de lignine pouvant atteindre 40 voire 50% en poids du matériau sec. Une telle quantité de lignine résulte de modifications introduites par le traitement de biodégradation ménagée subi par l'écorce.

Selon un autre mode de réalisation de l'invention, le matériau ligno-cellulosique de base est une écorce d'un arbre choisi parmi les feuillus, notamment une écorce de chêne en particulier de chêne pédonculé, d'eucalyptus, de châtaignier, de peuplier ou de hêtre.

Dans certaines applications il peut être préférable d'utiliser une écorce de résineux celle-ci contenant généralement une proportion de groupements hydroxyles plus importante, favorisant les échanges d'ions ou d'autres contaminants avec le milieu à traiter.

D'autres matériaux peuvent être utilisés. On citera à titre d'exemple tout résidu végétal de type ligno-cellulosique notamment tout tégument par exemple des coquilles, comme des coquilles d'arachide, ou des enveloppes de noix, de noisettes, de noix de coco ou autre produit végétal.

Dans le cadre de l'invention, le substrat est utilisé pour adsorber des contaminants selon la définition donnée ci-dessus, en milieu liquide en particulier des éléments ayant un numéro atomique supérieur à 10 et appartenant aux groupes IIIB, IVB, VB, VIB, VIIB, VIII, IB, IIB, IIIA, IVA, VA dans la classification périodique des éléments, par exemple des ions métalliques. Cette adsorption a par exemple pour but de traiter des effluents industriels, de purifier de l'eau douce ou salée et/ou de manière générale de récupérer des cations présentant un intérêt par exemple dans le cadre du recyclage de produits.

Des éléments particulièrement intéressants à récupérer sont les éléments suivants : Zinc (Zn), Cuivre (Cu), Cadmium (Cd), Cobalt (Co), Chrome (Cr), Plomb (Pb), Fer (Fe), Nickel (Ni), Or (Au), Argent (Ag) et les terres rares, etc...

Entre également dans le cadre de l'invention un procédé pour l'adsorption de contaminants dans un milieu liquide, par exemple des éléments ayant un numéro atomique supérieur à 10 et appartenant aux groupes IIIB, IVB, VB, VIB, VIIB, VIII, IB, IIB, IIIA, IVA, VA de la classification périodique des éléments, notamment des ions métalliques, et en particulier des cations, caractérisé en ce qu'il comprend :

- la mise en contact d'un substrat tel que défini précédemment, avec le milieu liquide à traiter ;
- si besoin l'ajustement du pH du milieu traité jusqu'à obtention d'un pH compris entre 3 et 9, par exemple entre 3 et 8, de préférence entre 5,5 et 7,5, selon la nature du substrat organique mis en oeuvre, et/ou des contaminants présents ;
- la séparation du substrat biologique (comprenant d'une part le matériau ligno-cellulosique de base dégradé par des microorganismes et/ou leurs parois), ayant retenu les contaminants, en particulier des ions métalliques, du milieu traité;
- le cas échéant le traitement du substrat ainsi récupéré pour séparer les contaminants adsorbés, par exemple par combustion du substrat ou par élution du substrat.

Le procédé de l'invention offre une solution intéressante pour le traitement d'effluents industriels ou encore pour la décontamination ou la purification de divers milieux liquides et plus généralement l'extraction de tout contaminant selon la définition de l'invention.

L'étape d'adsorption des contaminants à partir du milieu à traiter peut correspondre à une étape intermédiaire, suivie de la récupération et de l'isolement des éléments du milieu à traiter. Dans ce cas, l'adsorption est suivie par un traitement du substrat ayant adsorbé les contaminants pour récupérer ces contaminants par exemple par combustion ou par élution du substrat biologique.

Selon un autre mode de réalisation de l'invention, le procédé d'adsorption peut être mis en oeuvre à titre accessoire après avoir effectué par exemple une dépollution plus globale d'un milieu liquide déterminé.

Le procédé selon l'invention convient également pour des raisons de facilité de mise en oeuvre et de simplicité du réactif constitué par le substrat biologique, au traitement des pollutions accidentelles pour lesquelles il est important d'intervenir très rapidement.

Divers modes de réalisation du procédé peuvent être envisagés selon la nature du milieu à traiter, selon la nature et l'importance de la pollution et selon la concentration de contaminants que l'on veut extraire. On pourra par exemple réaliser une percolation du milieu à traiter sur une ou plusieurs colonnes contenant le substrat utilisé pour échanger ou adsorber les contaminants.

Pour la réalisation de ces colonnes, le substrat peut être incorporé dans une enveloppe perméable ou dans tout autre moyen adapté pour la réalisation de ces colonnes.

Si besoin d'autres éléments seront apportés au niveau de ces colonnes, par exemple des tensioactifs pour faciliter la pénétration des solutions et/ou des agents préservateurs du bois.

Dans d'autres cas, on peut mettre en contact dans un conteneur le milieu à traiter avec le substrat. La réaction d'adsorption peut être facilitée en modulant la température et notamment en agissant à une température comprise entre 5 et 90°C de préférence autour de 20°C. Avantageusement dans ce cas, le mélange formé par la solution à traiter et le substrat est agité.

L'invention concerne également un procédé de production du substrat biologique décrit précédemment caractérisé par :

- le broyage éventuel du matériau ligno-cellulosique ayant éventuellement subi préalablement un lessivage pour diminuer ou éliminer la toxicité résultant de la présence des composés phénoliques et des acides organiques, afin d'obtenir une granulométrie telle que le substrat n'est ni dans des conditions d'anaérobiose, ni susceptible de dessèchement rapide ;
- l'imprégnation par un produit azoté, de façon telle que le rapport C/N du substrat est compris entre environ 50 et 70, de préférence 55 ;
- l'ensemencement éventuel par des microorganismes capables de dégrader le matériau ligno-cellulosique ;
- la mise en tas et si nécessaire, l'ajustement du pH à une valeur comprise entre 3 et 9, par exemple entre 3 et 8, de préférence entre 5,5 et 7,5 et éventuellement de l'humidité à une valeur comprise entre 50 et 65% ;
- l'arrêt du processus de biodegradation dès lors que le rapport C/N atteint des valeurs inférieures à 50.

Pour arrêter la dégradation, on peut par exemple étaler les tas de manière à les assécher jusqu'à un taux d'humidité inférieur à 30%, ce qui freine le développement des microorganismes les plus actifs.

La biodégradation peut également être arrêtée en abaissant le pH à l'intérieur du tas d'écorce jusqu'à une valeur comprise entre 2 et 3, par exemple par aspersion par de l'acide dilué.

Selon un autre mode de réalisation de l'invention, l'activité des microorganismes responsables de la biodégradation peut aussi être freinée en immergeant l'écorce dans l'eau.

L'étape de lessivage peut être supprimée lorsque le matériau ligno-cellulosique initial a subi une étape de lessivage naturel par les eaux de pluie.

On entend par déshydratation rapide, un dessèchement du substrat jusqu'à des valeurs d'humidité inférieures à 30%, intervenant en quelques jours (1 à 4).

Avantageusement le traitement permet en outre d'augmenter la proportion de lignine et de diminuer celles de la cellulose et des hémicelluloses.

D'autres caractéristiques et avantages de l'invention apparaissent dans les figures et les exemples qui suivent.

- **Figure 1** : Extraction du Cd. Comparaison de l'extraction obtenue par précipitation, avec une écorce brute (non traitée) et avec une écorce traitée selon l'invention.
- **Figure 2** : Extraction du Ni. Comparaison de l'extraction obtenue par précipitation, avec une écorce brute (non traitée) et avec une écorce traitée selon l'invention.
- **Figure 3** : Cinétique d'extraction du Cd par l'écorce de pin. Comparaison des résultats obtenus avec une écorce brute et avec une écorce traitée selon l'invention.
- **Figure 4** : Cinétique d'extraction du Ni par l'écorce de pin. Comparaison des résultats obtenus avec une écorce brute et avec une écorce traitée selon l'invention.

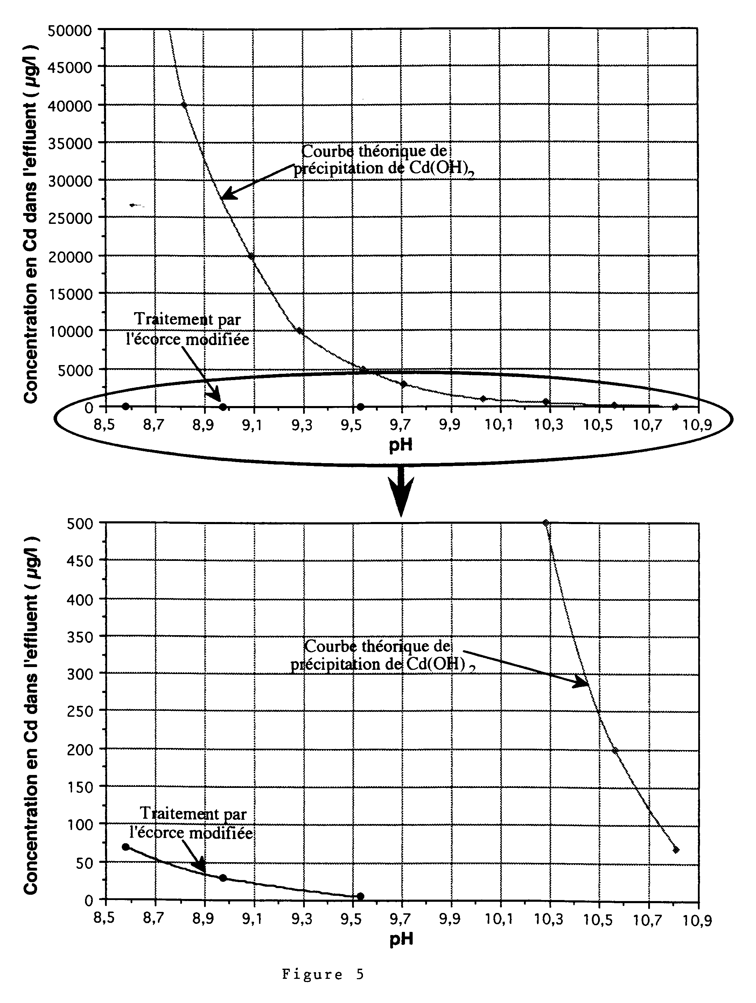

- **Figure 5** : Comparaison entre l'efficacité de dépollution d'un effluent industriel contenant du Cd par deux procédés :

    **a -** traitement de l'effluent avec l'écorce modifiée ;

    **b -** traitement de l'effluent par neutralisation à la soude et précipitation des hydroxydes.

## EXEMPLES

Ces exemples présentent des essais de biodégradation ménagée des écorces de pin sylvestre et de chêne pédonculé. Ils montrent également des tests d'extraction par l'écorce de pin modifiée du Cd et du Ni présents dans des solutions synthétiques.

## I - MATERIEL ET METHODES

### I-1 Traitement biologique du matériau ligno-cellulosique

Le matériau ligno-cellulosique de base peut être soumis à une dégradation ménagée biologique dans le but de le rendre plus efficace pour l'adsorption des contaminants. Cette dégradation a pour principaux effets :
- la dépolymérisation des composés phénoliques des extraits ;
- l'élimination d'une fraction de la cellulose et des hémicelluloses ;
- l'augmentation de la surface spécifique du substrat ;
- l'apparition de nouvelles parois appartenant aux microorganismes responsables de la biodégradation. Ces parois peuvent jouer un rôle dans l'adsorption des contaminants.

Dans la nature, la biodégradation des matériaux ligno-cellulosiques est lente. Au contact du sol, après deux ans, les fragments de matériau ligno-cellulosique sont modérément colonisés par des champignons, mais les modifications ultrastructurales des tissus ne sont pas perceptibles, le mycélium reste rare, et les parois du matériau ligno-cellulosique ne sont pas altérées. Les premiers stades de la décomposition du matériau ligno-cellulosique sont dominés par des champignons. Ceux-ci dégradent lentement les polymères complexes du type cellulose, lignine, pectines, etc... Les bactéries n'interviennent massivement que plus tard, et métabolisent des substances telles que les tanins et autres polyphénols. Ces observations ne sont valables que dans le cas de la décomposition en conditions naturelles.

Le contrôle de divers paramètres tels que la teneur en azote, l'humidité, le pH et l'aération permet de réaliser une biodégradaiton ménagée du matériau ligno-cellulosique.

Il est difficile de maîtriser un certain nombre de paramètres en condition de biodégradation industrielle, en particulier l'évolution de la température lorsque le matériau biologique est sous forme d'andins, qui est liée à l'activité microbienne. En revanche, d'autres facteurs sont plus facilement contrôlables. On peut citer :
- la concentration en oxygène (qui doit être supérieure à 10%) et le pourcentage d'espace libre (environ 50%), que l'on peut augmenter en retournant périodiquement les tas. En condition d'anaérobiose, la décomposition microbienne du matériau ligno-cellulosique aboutit à la formation d'acides organiques, de $CO_2$, de méthane, ce qui provoque la chute du pH, accompagnée d'un ralentissement très net de la biodégradation ;
- l'humidité, qui influe fortement sur le développement des microorganismes. Une trop grande quantité d'eau aboutit à des conditions d'anaérobiose, une trop faible quantité d'eau diminue l'activité des germes. Un pourcentage d'eau compris entre 50 et 65% constitue un optimum pour la biodégradation du matériau ligno-cellulosique ;
- le rapport C/N, qu'il faut amener à des valeurs comprises entre 50 et 70 en ajoutant au matériau ligno-cellulosique frais un composé azoté afin de favoriser le développement des microorganismes. On peut par exemple effectuer une addition d'urée de l'ordre de 1 à 0,2%, de préférence de 0,7 à 0,4% et notamment de 0,5% ;
- le pH, qui doit demeurer dans des limites comprises entre 5,5 et 7,5 pour maintenir une bonne activité microbienne. L'évolution du pH peut être contrôlée par l'aération des andins comme il a été dit plus haut.

Le procédé de biodégradation ménagée comporte différentes phases qui sont :

1. le lessivage du matériau ligno-cellulosique. Cette opération est destinée à éliminer ou à diminuer la toxicité du substrat due aux composés phénoliques et aux acides organiques. Une solution avantageuse consiste à employer un matériau ligno-cellulosique stocké à l'extérieur et soumis au lessivage par les eaux de pluie ;

2. le broyage éventuel du matériau ligno-cellulosique. Il est préférable d'utiliser une granulométrie qui n'entraîne ni des conditions d'anaérobiose au coeur des andins (granulométrie trop fine), ni une déshydratation trop rapide du substrat (granulométrie trop importante). La granulométrie la plus favorable semble être de 2 à 5 cm de longueur, 0,5 à 1 cm de largeur, et 0,4 à 0,6 cm d'épaisseur ;

3. l'imprégnation d'un produit azoté. Le rapport C/N du matériau ligno-cellulosique étant très élevé, il est nécessaire d'ajouter une source d'azote de façon à accélérer le processus de biodégradation en favorisant l'activité microbienne. Les sources d'azote sont par exemple $CO(NH_2)_2$, $NH_4NO_3$, $KNO_3$ ou $Ca(NO_3)_2$ ;

4. l'addition éventuelle de microorganismes starters. Il est possible d'accélérer la biodégradation en utilisant des microorganismes cellulolytiques ;

5. la mise en andins. L'écorce est disposée en longs tas d'une hauteur d'environ 1 à 2 mètres. L'humidité à l'intérieur des andins doit rester proche de 50 et 65%. Elle est contrôlée par aspersion d'eau. Les tas sont retournés périodiquement afin de favoriser une bonne aération, ce qui permet en outre de maintenir le pH dans une fourchette comprise entre 5,5 et 7,5 ;

6. l'arrêt du processus de biodégradation lorsque le rapport C/N atteint des valeurs inférieures à 50. Les andins sont étalés afin d'être séchés jusqu'à un taux d'humidité inférieur à 30%, ce qui freine le développement des microorganismes les plus actifs.

Le schéma du procédé de dégradation peut être résumé comme suit :

**Matériau ligno-cellulosique, notamment écorce, lessivé(e)**

```
                              |
                              |
        ┌──────  Broyage
        |              |
        └──────  Tamisage


        Imprégnation  ───────  composés d'azote
                      |
                      |        addition éventuelle de
        Mise en tas et ───────  starters
        retournement   ───────  contrôles
                      |          (pH, humidité)
                      |
        Séchage        ───────  eau
```

I.2 Tests d'extraction des ions métalliques

**I.2.a Tests en fioles agitées**

Ces tests ont été réalisés dans des fioles hermétiquement closes. 4 g d'écorce broyée sont ajoutés à 200 ml de la solution à tester. Le tout est agité. Le pH choisi est ajusté par addition de HCl ou de NaOH. Après agitation le mélange est centrifugé. La concentration de la solution résiduelle est analysée.

**I.2.b Cinétique d'extraction du Cd et du Ni**

Ces tests ont été réalisés en bain agité. 30 g d'écorce broyée sont ajoutés à 3000 ml de la solution à tester. Le tout est agité. Le pH est maintenu constant grâce à un régulateur automatique. La concentration de la solution est régulièrement analysée.

**II - RESULTATS**

II-1 Composition chimique de l'écorce modifiée

La biodégradation ménagée a pour effets :
- la dépolymérisation des composés phénoliques des extraits susceptibles de colorer les effluents traités (cf tableau I) ;
- l'augmentation de la proportion de lignines (cf tableau II).

Tableau I : Compositions chimiques des composés phénoliques des extraits des écorces avant et après traitement biologique.

| substrat | traitement | Composition des composés phénoliques des extraits (en % poids sec) | | |
|---|---|---|---|---|
| | | monomères | di et trimères | polymères |
| pin sylvestre | aucun | 17 | 9 | 74 |
| | biologique | 90 | 10 | 0 |
| chêne pédonculé | aucun | 29 | 13 | 58 |
| | biologique | 100 | 0 | 0 |

Tableau II : Compositions chimiques des écorces avant et après traitement biologique.
(Analyses réalisées par la méthode de Van Soest)

| substrat | traitement | Composition (en % poids sec total) | | | | |
|---|---|---|---|---|---|---|
| | | extraits | hémicelluloses | cellulose | lignines | cendres |
| pin sylvestre | aucun | 10,7 | 20,7 | 26,6 | 38,9 | 3,1 |
| | biologique | 21,3 | 15,7 | 18,8 | 40,6 | 3,6 |
| chêne pédonculé | aucun | 10,2 | 14,0 | 32,0 | 32,6 | 11,2 |
| | biologique | 21,2 | 13,7 | 16,1 | 36,6 | 12,4 |

II-2 Essais d'extraction du Cd et du Ni par l'écorce modifiée

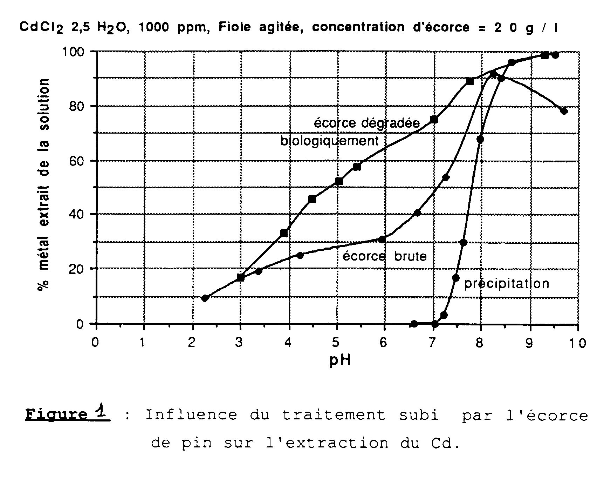

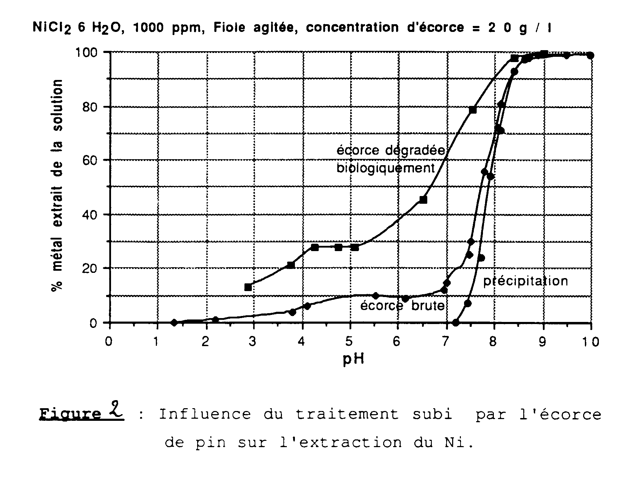

L'extraction du Cd et du Ni par l'écorce a été étudiée en fiole agitée, pour des solutions contenant 1000 ppm de métal. Les figures 1 et 2 montrent les résultats obtenus. Plus de 95% de la quantité de métal peut être éliminée de la solution. Il faut remarquer que le mécanisme d'extraction des ions métalliques n'est pas la précipitation puisque l'on se situe à gauche de la courbe de précipitation (cf figures 1 et 2).

Le taux d'extraction du Cd ou du Ni dépend du type de substrat utilisé. L'écorce ayant subi une dégradation biologique ménagée est plus efficace que l'écorce brute pour extraire le métal.

Il est important de souligner que les solutions traitées par l'écorce brute présentent une coloration brune. Ce n'est pas le cas pour les solutions qui ont été en contact avec les écorces ayant subi une biodégradation ménagée.

La cinétique d'extraction du Cd et du Ni a été étudiée en bains agités. Ces tests ont été réalisés à pH 6,80 dans le cas du Cd et pH 7,10 dans celui du Ni (conditions de solubilité limite pour des solutions à 1000 ppm) avec une concentration de pulpe de 1% (10g d'écorce par litre).

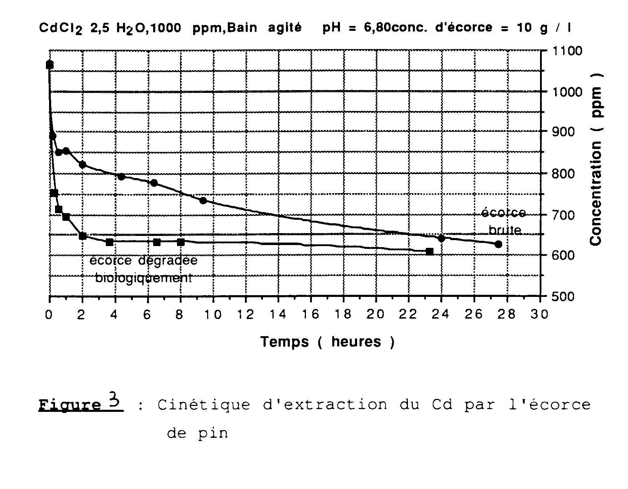

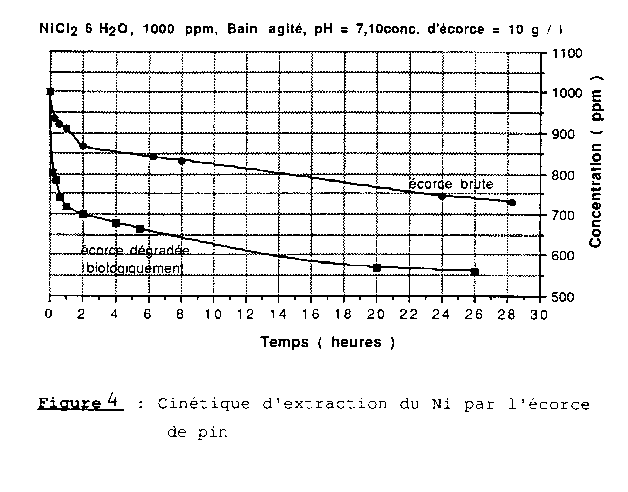

Les figures 3 et 4 montrent que la cinétique d'extraction du métal est plus rapide avec l'écorce traitée biologiquement. Dans le cas du Cd, la concentration de la solution atteint un équilibre après 2 heures contre plus de 24 heures avec l'écorce brute.

**Conclusions**

La dégradation biologique ménagée de l'écorce conduit à un substrat dont la composition chimique est caractérisée par :

- la dépolymérisation des composés phénoliques solubles susceptibles de colorer les effluents traités :

- l'augmentation de la teneur en lignine.

Ces caractéristiques en font un substrat intéressant pour l'extraction des ions métalliques en solution. Les résultats obtenus avec le Cd et le Ni montrent que :

1. l'écorce dégradée biologiquement est plus efficace pour retenir le Cd et le Ni que l'écorce brute ;

2. le taux d'extraction dépend du pH ;

3. plus de 95% du métal présent dans une solution de 1000 ppm peut être éliminé avec une concentration d'écorces de 20g/l ;

4. la cinétique d'extraction du Cd et du Ni est plus rapide avec l'écorce dégradée biologiquement qu'avec l'écorce brute.

III - Test réalisé à l'échelle du laboratoire, sur un effluent industriel

L'effluent était produit lors de la fabrication de phosphate alimentaire à partir de minerai phosphaté du Maroc. Ce dernier contenait en moyenne 19 mg/kg de cadmium (cf. analyse complète du minerai dans le tableau IIIa) que l'on retrouve dans les eaux de procédé à des concentrations variant entre 20 $\mu$g/l et 110 $\mu$/l (cf. analyse des eaux de procédé dans le tableau IIIb). Des essais de traitement de ces eaux de procédé ont été effectués avec l'écorce modifiée biologiquement de la façon décrite ci-dessus.

Tableau IIIa : Composition du minerai phosphaté du Maroc

| | | COMPOSITION | | |
|---|---|---|---|---|
| | | MOYENNE | MINIMUM | MAXIMUM |
| $H_2O$ | (%) | 1,62 | 1,24 | 1,87 |
| $P_2O_5$ | (%) | 31,15 | 30,67 | 31,54 |
| $Ca_3(PO_4)_2$ | (%) | 68,07 | 67,01 | 68,91 |
| $Fe_2O_3$ | (%) | 0,16 | 0,09 | 0,19 |
| $Al_2O_3$ | (%) | 0,21 | 0,13 | 0,33 |
| $SiO_2$ | (%) | 0,78 | 0,31 | 1,45 |
| $CaCO_3$ | (%) | 16,27 | 14,60 | 17,90 |
| $SO_3$ | (%) | 1,26 | 1,20 | 1,40 |
| F | (%) | 4,25 | 4,00 | 5,13 |
| CaO | (%) | 50,08 | 49,30 | 51,20 |
| Insoluble HCl | (%) | 2,33 | 1,22 | 2,75 |
| Cd | (ppm) | 19 | 14 | 22 |
| As | (ppm) | 13 | 9 | 16 |
| Pb | (ppm) | < 4 | < 3 | 6 |
| Cu | (ppm) | 21 | 17 | 29 |
| Zn | (ppm) | 386 | 280 | 740 |
| Mg | (ppm) | 4167 | 3000 | 5000 |
| Cr | (ppm) | 382 | 348 | 406 |
| Hg | (ppm) | 18 | 14 | 24 |

## Tableau IIIb : Composition moyenne des eaux de procédé (effluents)

| | CARACTERISTIQUES | | | |
|---|---|---|---|---|
| | MOYENNE | MINIMUM | MAXIMUM | NORMES |
| Débit ($m^3$/h) | 246 | 183 | 320 | |
| pH | 9,2 | 8,7 | 9,6 | 6 < pH < 9 |
| Matières en suspension (mg/l) | 29 | 11 | 60 | 60 |
| P total (mg/l) | 2,8 | 2,8 | 2,8 | |
| Cl (mg/l) | 33530 | 26740 | 44960 | |
| F (mg/l) | 0,4 | 0,2 | 0,5 | |
| $SO_4^2$ (mg/l) | 442 | 355 | 495 | |
| $HCO_3$ (mg/l) | 79 | 62 | 110 | |
| $CO_3^2$ (mg/l) | 41 | 23 | 56 | |
| Na (mg/l) | 471 | 420 | 560 | |
| K (mg/l) | 19,7 | 15,0 | 23,0 | |
| Ca (mg/l) | 16833 | 14600 | 20800 | |
| Mg (mg/l) | 347 | 280 | 420 | |
| Ba (mg/l) | 2,6 | 2,6 | 2,6 | |
| Cd (mg/l) | 0,054 | 0,020 | 0,110 | 0,200 - 0,300 |

Le traitement de l'effluent par l'écorce modifiée permet d'abaisser la concentration en Cd à des valeurs inférieures à 70, 30 et 20 µg/l pour des pH respectifs de 8,65, 8,95 et 9,55. A ces mêmes valeurs de pH, le traitement conventionnel par neutralisation/ précipitation aboutit, en théorie, à des concentrations résiduelles en cadmium de l'ordre de 70000, 27500, 50000 µg/l, respectivement (d'après Bara, 1988, "Traitement de surface, environnement et compétitivité, Ed. Eyrolles, Paris).

Le traitement conventionnel par addition de soude concentrée à des valeurs de pH supérieures à 10, ne permet pas par ailleurs de libérer l'effluent traité sauf à ajouter une autre étape de traitement afin d'abaisser le pH.

## Revendications

1. Substrat biologique tel qu'obtenu à partir d'un matériau de type ligno-cellulosique (dit "matériau ligno-cellulosique de base") dégradé par des microorganismes, caractérisé par :
   - une quantité de lignine supérieure à 10%, avantageusement 15% en poids sec du matériau ligno-cellulosique ;
   - une répartition en composés phénoliques des extraits du matériau ligno-cellulosique du substrat, telle que la proportion en poids sec des composés phénoliques sous forme de polymères est inférieure à la somme des proportions en poids sec des trimères, dimères et monomères des composés phénoliques des extraits ;
   - une quantité de carbone (C) et d'azote (N) telle que le rapport C/N est compris entre environ 50 et environ 70, de préférence est situé autour de 55 ;
   - la présence de microorganismes, notamment de microorganismes capables de dégrader des matériaux de type ligno-cellulosique et le cas échéant la présence de leurs parois.

2. Substrat selon la revendication 1, caractérisé en ce que les extraits sont essentiellement dépourvus de composés phénoliques sous forme de polymères.

3. Substrat selon la revendication 1, caractérisé en ce que la proportion en poids sec des composés phénoliques sous forme de polymères des extraits du substrat est inférieure à environ 10% en poids sec des composés phénoliques des extraits, de préférence inférieure à environ 5%.

4. Substrat selon l'une quelconque des revendications 1 à 3, caractérisé en ce que le matériau ligno-cellulosique de base mis en oeuvre, a subi une opération de lessivage.

5. Substrat à base d'un matériau ligno-cellulosique et de microorganismes selon la revendication 1, caractérisé en ce que le matériau ligno-cellulosique de base est une écorce d'arbre.

6. Substrat selon l'une quelconque des revendications 1 à 5, caractérisé en ce que la proportion totale en poids sec de composés phénoliques des extraits du substrat est inférieure à la proportion en poids sec de composés phénoliques des extraits du matériau ligno-cellulosique de base.

7. Substrat selon l'une quelconque des revendications 1 à 6, caractérisé en ce que les proportions d'hémicelluloses et de cellulose en poids sec du substrat sont inférieures à la proportion de ces constituants dans le matériau ligno-cellulosique de base.

8. Substrat selon l'une quelconque des revendications 1 à 7, caractérisé en ce qu'il est essentiellement sous forme de particules dont la majorité a une granulométrie inférieure à 1 cm, de préférence inférieure à 5 mm, avantageusement inférieure à 1 mm, notamment comprise entre 400 $\mu$m et 100 $\mu$m.

9. Substrat selon l'une quelconque des revendications 1 à 8, caractérisé en ce que le matériau ligno-cellulosique de base est une écorce d'un arbre choisi parmi les conifères notamment une écorce de sapin, d'épicéa, de pin maritime ou de pin sylvestre.

10. Substrat selon l'une quelconque des revendications 1 à 8, caractérisé en ce que le matériau ligno-cellulosique de base est une écorce d'un arbre choisi parmi les feuillus notamment une écorce de chêne en particulier de chêne pédonculé, d'eucalyptus, de châtaignier, de peuplier ou de hêtre.

11. Substrat selon l'une quelconque des revendications 1 à 10, caractérisé en ce que le matériau ligno-cellulosique de base est ou comprend en outre un résidu végétal notamment un tégument ligneux par exemple une coquille ou une enveloppe végétale.

12. Substrat selon l'une quelconque des revendications 1 à 11, caractérisé en ce qu'il comprend des microorganismes choisis parmi les souches de bactéries, de champignons, de levures capables de dégrader préférentiellement la cellulose et les hémicelluloses.

13. Utilisation du substrat selon l'une quelconque des revendications 1 à 12, pour adsorber des contaminants, en milieu liquide, notamment pour adsorber des éléments ayant un numéro atomique supérieur à 10 et appartenant aux groupes IIIB, IVB, VB, VIB, VIIB, VIII, IB, IIB, IIIA, IVA, VA de la classification périodique des éléments, par exemple des ions métalliques et notamment des cations lourds, en particulier pour traiter des effluents industriels, pour purifier de l'eau ou tout milieu à partir duquel on souhaite extraire des contaminants.

14. Procédé pour l'adsorption de contaminants dans un milieu liquide, en particulier dans des effluents industriels, notamment pour adsorber des éléments ayant un numéro atomique supérieur à 10 et appartenant aux groupes IIIB, IVB, VB, VIB, VIIB, VIII, IB, IIB, IIIA, IVA, IVA, VA de la classification périodique des éléments et notamment des ions métalliques, en particulier des cations, caractérisé en ce qu'il comprend :
- la mise en contact d'un substrat selon l'une quelconque des revendications 1 à 13, avec le milieu liquide à traiter ;
- si besoin l'ajustement du pH du milieu traité jusqu'à obtention d'un pH compris entre 3 et 8, de préférence entre 5,5 et 7,5, selon la nature du substrat organique mis en oeuvre, et/ou des contaminants présents ;
- la séparation du substrat organique ayant retenu les contaminants, en particulier des ions métalliques, du milieu traité;

- le cas échéant le traitement du substrat ainsi récupéré pour séparer les contaminants adsorbés, par exemple par combustion du substrat ou par élution du substrat.

15. Procédé selon la revendication 14, caractérisé en ce que la mise en contact est réalisée par la percolation du milieu à traiter sur une ou plusieurs colonnes contenant le substrat utilisé comme filtre pour échanger ou adsorber les contaminants du milieu liquide.

16. Procédé selon la revendication 14, caractérisé en ce que la mise en contact est réalisée par addition du milieu liquide à traiter, à une quantité donnée de substrat et en ce que le mélange est agité, à une température comprise entre 5 et 90°C, de préférence autour de 20°C.

17. Procédé pour la préparation d'un substrat selon l'une quelconque des revendications 1 à 12, comprenant les étapes suivantes :
    - le broyage éventuel du matériau ligno-cellulosique ayant éventuellement subi préalablement un lessivage pour diminuer ou éliminer la toxicité résultant de la présence des composés phénoliques et des acides organiques, afin d'obtenir une granulométrie telle que le substrat n'est ni dans des conditions d'anaérobiose, ni susceptible de dessèchement rapide ;
    - l'imprégnation par un produit azoté, de façon telle que le rapport C/N du substrat est compris entre environ 50 et 70, de préférence 55 ;
    - l'ensemencement éventuel par des microorganismes capables de dégrader le matériau ligno-cellulosique ;
    - la mise en tas et si nécessaire, l'ajustement du pH à une valeur comprise entre 3 et 9, par exemple entre 3 et 8 de préférence entre 5,5 et 7,5 et éventuellement de l'humidité à une valeur comprise entre 50 et 65% ;
    - l'arrêt du processus de biodégradation dès lors que le rapport C/N atteint des valeurs inférieures à 50.

CdCl$_2$ 2,5 H$_2$O, 1000 ppm, Fiole agitée, concentration d'écorce = 2 0 g / l

**Figure 1** : Influence du traitement subi par l'écorce de pin sur l'extraction du Cd.

NiCl$_2$ 6 H$_2$O, 1000 ppm, Fiole agitée, concentration d'écorce = 2 0 g / l

**Figure 2** : Influence du traitement subi par l'écorce de pin sur l'extraction du Ni.

CdCl$_2$ 2,5 H$_2$O,1000 ppm,Bain agité   pH = 6,80conc. d'écorce = 10 g / l

**Figure 3** : Cinétique d'extraction du Cd par l'écorce
de pin

NiCl$_2$ 6 H$_2$O, 1000 ppm, Bain agité, pH = 7,10conc. d'écorce = 10 g / l

**Figure 4** : Cinétique d'extraction du Ni par l'écorce de pin

Figure 5

Office européen
des brevets

**RAPPORT DE RECHERCHE EUROPEENNE**

Numero de la demande

EP 93 40 2020

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | US-A-5 081 027 (NISHIDA)<br>* colonne 11 - colonne 12; revendications 1-4 * | 1 | B01J20/24<br>C02F1/28 |
| A | US-A-4 877 534 (NISHIDA)<br>* colonne 3, ligne 1 - colonne 5, ligne 10 * | 1,5,11 | |
| A | EP-A-0 054 777 (ERBSLöH& CO)<br>* page 3, ligne 10 - page 6, ligne 31 * | 1,5,9,13 | |
| A | FR-A-2 223 078 (HITACHI)<br>* page 3, ligne 16 - page 4, ligne 35 * | 1,13 | |
| A | FR-A-2 107 667 (CESKOSLOVENSKA AKADEMIE) | | |
| A | DATABASE WPI<br>Week 7407,<br>Derwent Publications Ltd., London, GB;<br>AN 74-12597V<br>& JP-A-49 003 916 (MITSUBIHI RAYON)<br>* abrégé * | 1 | DOMAINES TECHNIQUES RECHERCHES (Int.Cl.5)<br><br>B01J<br>C02F |
| A | DATABASE WPI<br>Week 8242,<br>Derwent Publications Ltd., London, GB;<br>AN 82-90079E<br>& SU-A-891 141 (URALS KIROV POLY)<br>* abrégé * | | |

Le présent rapport a été établi pour toutes les revendications

| Lieu de la recherche | Date d'achèvement de la recherche | Examinateur |
|---|---|---|
| LA HAYE | 17 Novembre 1993 | WENDLING, J |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

20